# EUROPEAN PATENT APPLICATION

(11) **EP 4 570 081 A1**
(43) Date of publication of application: **18.06.2025**
(21) Application number: 23383286.4
(22) Date of filing: 13.12.2023
(51) Int. Cl.: A23L 11/50, A23L 7/152, A23L 7/104, A23J 3/22, A23J 3/26, A23P 30/20

(54) **METHOD FOR MANUFACTURING A DRIED PLANT-BASED FOOD PRODUCT, DRIED PLANT-BASED FOOD PRODUCT, AND USES THEREOF**

(71) Applicant: Cifre Bordoy, Bernardo, 17003 Palma de Mallorca (ES)
(72) Inventor: Cifre Bordoy, Bernardo, 17003 Palma de Mallorca (ES)
(74) Representative: Curell Suñol S.L.P.

(57) **Abstract**

The invention refers to a method for manufacturing a dried plant-based food product comprising the following steps: fermenting a plant seed germ-rich fraction to obtain a fermented germ broth, reducing the water content of the obtained fermented germ broth by using mechanical solid-liquid separation means, to obtain an extrudable fermented germ solid fraction, extruding the obtained extrudable fermented germ solid fraction to form it into the desired shape, to obtain a formed fermented germ extrudate, and drying the formed fermented germ extrudate at a temperature of 45°C or more, to obtain a dried plant-based food product. The method according to the invention allows to obtain a food product that combines a high-protein, good mechanical properties for storage and transportation, good palatability appealing to the consumer, and from a sustainable source of raw materials, with little to no processing and at a low cost. The invention also refers to related food products, methods and uses.

## Description

### Field of the invention

The invention relates to a method for manufacturing a dried plant-based food product. The invention further relates to a dried plant-based food product obtainable by said method. The invention also relates to plant-based food products comprising said dried plant-based food product according to the invention, food products derived thereof, and methods to manufacture and uses of said food products.

### State of the art

In the context of the expected increase of the world's total population, and the increasing demand of food in general over the next years, plant-based foods are considered a healthier and more sustainable option than their meat-based counterparts. Therefore, over the last years, the demand for plant-based foods, particularly, the demand for high-protein plant-based foods, has rapidly increased.

Nowadays, the most common sources of plant-based protein are known to be the seeds of leguminous and cereal plants, due to their high protein content, the possibility to cultivate them at scale, as well as the possibility to transport them and store them for a relatively long period. In addition to the actual seeds themselves, for example, beans, soya, wheat, corn, and rice, several plant-based food products based on these leguminous and cereal seeds have appeared and are being marketed as meat alternatives for protein intake.

However, there are still challenges to provide alternatives to animal-derived protein sources, that can compete with meat or dairy-based food products in terms of protein content, texture, and acceptability among customers.

First, from a production point of view, plant-based food products often require the availability of land to cultivate the raw materials. Further, this land needs to have the climatic conditions, for example temperatures and precipitations, suitable for the plants to grow and produce are found. On top of that, while intensive agricultural practices, and more recently automation, can improve yields, these raw materials are already being used for the manufacture of other food products. Therefore, having more products depending on the same raw materials increases the demand, putting pressure on the producers and negatively impacting on costs. Last, often these costs are already a limiting factor, both for the raw material, or the processed food product, resulting in an overall higher cost per gram of plant-based protein when compared with animal-based protein, for example, meat or dairy protein.

Second, in terms of their nutritional profile, plant-based food products are often very rich in carbohydrates, and even the above-mentioned leguminous- and cereal-based food products have a more limited protein content per gram of food product as compared to their meat- or dairy-based alternatives.

Third, the currently available high-protein plant-based food options fall short in terms of other important factors such as cost of the consumer ready product, flavour profile, and palatability. In this context, high-protein plant-based food products that aspire to replace their animal-based, particularly their meat-based counterparts, often require a lot of processing and the use of food additives to achieve flavour and texture properties that not only resemble to meat, but that are per se likeable and thus, appreciated by the end consumer. This, on top of increasing the final product cost, goes against the current trend towards consuming less processed food and towards reducing the consumption of food additives that could have negative effects on human health.

Therefore, there is the need to provide a solution to the above-mentioned problems, particularly to provide food products that combine high-protein content, good palatability properties, and that can be obtained from a sustainable source of raw material, with little to no processing nor additives and at a low cost. Solutions are particularly needed as alternatives for the currently available meat-based products.

### Summary of the invention

It is an object of the invention to provide a method for manufacturing a dried plant-based food product that solves the above-mentioned problems and allows to obtain a food product that combines a high-protein content, good mechanical properties, to facilitate storage and transportation, good palatability properties to be appealing to the consumer, and that can be obtained from a sustainable source of raw materials, with little to no processing and at a low cost.

This purpose is achieved by a method of the type indicated at the beginning, characterized in that it comprises the following steps:
[a] fermenting a plant seed germ-rich fraction to obtain a fermented germ broth, using a microorganism inoculum, said microorganism inoculum comprising a microorganism suitable for food applications,
[b] reducing the water content of the fermented germ broth obtained in step [a] to a water content sufficiently low for the fermentation germ broth to conserve its shape after being formed, by using mechanical solid-liquid separation means, to obtain an extrudable fermented germ solid fraction,
[c] extruding the extrudable fermented germ solid fraction obtained in step [b] to form it into the desired shape, to obtain a formed fermented germ extrudate, and
[d] drying the formed fermented germ extrudate obtained in step [c] at a temperature of equal to or more than 45°C, to obtain a dried plant-based food product.

The method according to the invention allows to manufacture a dried plant-based food product that has a high content of protein, and that has improved mechanical properties to allow packaging and transportation. At the same time the dried plant-based food product obtained by the method according to the invention has improved rehydration properties, which allow to reconstitute a wet or rehydrated plant-based food product that is elastic, stable (i.e. does not dissolve), and that has an appealing look, a neutral pleasant taste, and a soft and elastic in-mouth texture. Further, the method according to the invention allows to obtain said advantageous dried plant-based food product from a sustainable source of raw materials, such as plant seed germ-rich fractions, some of which are by-products of other industries, such as the flour industry and the food & cosmetic additives industry, and that, per se, are difficult to process and to turn into viable and appealing consumer-ready food products.

Thus, the method according to the invention is advantageous to manufacture high-protein plant-based ingredients for the preparation of foods, for example, and particularly, that can replace the currently available meat-based alternatives, from a sustainable source of raw materials, and with a simple and cost-effective process, that does not require the use of additives to obtain a meat analogue product with meat-like properties.

In the context of the invention, a "dried" food product is a food product that does not contain more than 25% w/w moisture, that is a food product with a water content equal to or less than 25% w/w with respect to the total weight of dried food product. Dried food products are also known as desiccated or low-moisture (LM) foods products. Preferably a dried food product is a product with a water content equal to or less than 15% w/w, more preferably equal to or less than 10% w/w, and even more preferably equal to or less than 7.5% w/w, with respect to the weight of dried food product. In a further preferred embodiment, a dried food product is a product with a water content between 15% w/w and 2.5% w/w, and more preferably between 10% w/w and 5% w/w, with respect to the weight of dried food product.

In the context of the invention, a "high-protein food product", also referred to as a "high protein content food product", a "food product with high protein content", or a "high-protein ingredient", means a food product or an ingredient wherein at least 20% of the energy value of the food is provided by protein, as referred to in the Regulation (EC) No 1924/2006 of the European Parliament and of the Council of 20 December 2006 on nutrition and health claims made on foods (OJ L 404, 30.12.2006, p. 9).

In the context of the invention, the conversion factors for the calculation of energy to be considered are the ones referred to in Annex XIV of the Regulation (EU) No 1169/2011 of the European Parliament and of the Council of 25 October 2011 on the provision of food information to consumers, amending Regulations (EC) No 1924/2006 and (EC) No 1925/2006 of the European Parliament and of the Council, and repealing Commission Directive 87/250/EEC, Council Directive 90/496/EEC, Commission Directive 1999/10/EC, Directive 2000/13/EC of the European Parliament and of the Council, Commission Directives 2002/67/EC and 2008/5/EC and Commission Regulation (EC) No 608/2004. The more relevant conversion factors being:

| | | |
|---|---|---|
| Energy from carbohydrate (except polyols) | 17 kJ/g | 4 kcal/g |
| Energy from protein | 17 kJ/g | 4 kcal/g |
| Energy from fat | 37 kJ/g | 9 kcal/g |
| Energy from organic acid | 13 kJ/g | 3 kcal/g |
| Energy from fibre | 8 kJ/g | 2 kcal/g |

In the context of the invention, the term "fraction" is used to refer to a part of a whole, in particular to a part of a raw material that results, for example, after that raw material has been subjected to a separation or fractionation process.

In the context of the invention, the term "germ" refers to a "plant seed germ". The plant germ is comprised in the seed of a plant and can generally be defined as the part of the seed that will turn into the actual plant upon germination of the seed. Other main components of the plant seed include the endosperm and the seed coat or husk. The most relevant characteristics of the "germ" in the context of the invention are its high protein content.

In the context of the invention, the terms "rich" or "enriched" are used to refer to a particular component, for example, "germ-rich" or "enriched in germ" when the component is "germ", and referring to a fraction of a mixture, for example, a "plant seed germ-rich fraction" or a "plant seed fraction enriched in germ", where the plant seed is considered a mixture of its components, namely the coat, husk, or hull, the endosperm, and the germ.

In the context of the invention, the expression "a plant seed germ-rich fraction" needs to be understood as a fraction of said plant seed that comprises a large amount of "germ" when compared with the amount of germ present in other fractions. Fractions of a plant seed result from the plant seed being subjected to a fractionation process, that is result from the plant seed being separated in different fractions. Depending on the separation process, the "germ-rich fraction" of a plant seed may contain "germ" as the main component, that is that the "germ-rich fraction" may contain "germ" in a large proportion when compared with other components present in said fraction. For example, depending on the seed used as raw material, and the separation process used to obtain the fractions, the "plant seed germ-rich fraction" will mainly contain "germ" but can also contain, in addition to the "germ", fragments of the endosperm or fragments of other parts of the seed, such as the seed coat (also known as husk or hull). In the context of the invention, "a plant seed germ-rich fraction" can also be a plant seed fraction consisting of purely of germ, meaning that there is very low or no contamination from other components of the seed in said fraction.

In the context of the invention, the terms "fermented" and "fermenting" refer to the fact that a raw material, for example, a food product or a plant seed germ-rich fraction, is subjected to a fermentation. The skilled person knows what a fermentation is, and how to generally carry it out. Generally, a fermentation involves the culture of a microorganism inoculum in an aqueous media containing raw materials, which, as the fermentation progresses, are affected by the microorganism metabolism. The raw materials can be consumed to provide building blocks for the microorganism to grow and reproduce, and/or the raw materials can be modified by enzymes produced and secreted by said microorganisms.

In the method of the invention, the fermentation step is a complex process that allows to modify the nutrient profile of the plant seed germ-rich fraction used as raw material and at the same time to contribute to the mechanical properties of the final product. These modifications are difficult to characterize but can be seen by changes in the viscosity of the fermentation broth as the fermentation progresses. This is due, among others, to the breaking of the carbohydrates contained in the plant seed germ-rich fraction, as well as to the pre-processing of the proteins contained therein, due to proteolytic activity of the inoculum and its enzymes. Additionally, the microorganisms that grow by utilizing the different components of the plant seed germ-rich fraction used as raw material become themselves a source of protein, and of other complex nutrients that will be incorporated into the final product. Further, some of these microorganisms remain adhered to the surface of the particles that form the germ-rich fraction, and in the water retained in the dough before drying, and will end up contributing to the final properties of the final dried plant-based food product obtained by the method according to the invention. The contribution of this microorganisms to the mechanical properties and to the nutrient and flavour profile of the final product are, if possible, very complex to determine.

In the context of the invention, the expression "a microorganism suitable for food applications" is to be understood in general terms as a microorganism considered safe for use in food and/or food related processes, preferably for use in food for human consumption and/or processes related to food for human consumption. For example, "a microorganism suitable for food applications" can be a microorganism considered Generally Recognised As Safe (GRAS) microorganism, according to the US Food and Drug Administration criteria, and/or a microorganism considered to comply with the Qualified Presumption of Safety (QPS) according to the European Food and Safety Agency criteria.

In the context of the invention, the terms "fermentation broth" or "broth" refer to the liquid obtained after mixing the media, for example, water, the raw materials, and the inoculum to carry out the fermentation. At the end of the fermentation, the broth that comprises the fermented raw material, the microorganism comprised in the inoculum plus the ones resulting from the inoculum growing or reproducing, and the remaining water.

In the context of the invention, "reducing the water content by using mechanical solid-liquid separation means" refers to the use of mechanical solid-liquid separation means, such as for example, filtration, sedimentation, or any other solid-liquid separation technique that relies on the physical retention of the solid fraction and the elimination of the liquid fraction. Preferably, these mechanical solid-liquid separation means need to be able to retain as much of the solid fraction as possible while ensuring that the solid fraction can be recovered for further processing, and that the separation process remains efficient and cost-effective. Preferred mechanical-solid liquid separation means are mechanical-solid-liquid separation means commonly used in the food industry such as filter bags, or press filters, the mesh or pore size of which can be adjusted depending on the particle size of the raw material used and the final product to be obtained as to ensure that the solid fraction can be recovered for further processing. In the method of the invention, the water content needs to be reduced to a level that allows the extrudable fermented germ solid fraction to be extruded and readily can be formed into the desired shapes, allowing said shapes to maintain its structure upon manipulation and drying. At the same time, the water content of the extrudable fermented germ solid fraction in the method according to the invention needs to be sufficient to allow a certain amount of microorganism from the fermentation to remain in the resulting extrudable fermented germ solid fraction. While it is a complex process to characterize, the properties of the final product depend on the presence of microorganisms on the solid fraction to obtain the desired mechanical properties as well as the desired nutrient profile and in mouth texture and flavour of the final dried plant-based food product according to the invention.

In the context of the invention, the expression "a water content sufficiently low for the fermentation germ broth to conserve its shape after being formed" when referring to the step of reducing the water content of the fermented germ broth means a water content sufficiently low to allow the fermentation broth, which, after a certain level of water has been removed, becomes a dough, to be formed and to maintain the shape given to it without collapsing.

It is another object of the present invention to provide a dried plant-based food product obtainable by the method according to the invention.

The dried plant-based food product according to the invention, obtainable by the method according to the invention, has several advantages already mentioned above. The dried plant-based food product according to the invention is a high-protein food product, plant-based, that can be used as a versatile, nutritious and appealing ingredient for the preparation of foods. It is made from a sustainable source of raw materials by a cost-effective process, and that does not contain any additives. On top of that, the dried food product according to the invention has improved mechanical properties that allow packaging and transportation without the product being damaged, improved rehydration properties, and which at the same time allow the reconstitution of a wet or rehydrated plant-based food product that is elastic, stable (i.e. does not dissolve), and that has a neutral pleasant taste and an appealing soft and elastic in-mouth texture. These properties make the dried food product according to the invention an optimal ingredient to, for example, replace the currently available meat-based alternatives as a source of protein in foods or to make more elaborated high protein plant-based food products.

As also highlighted above, the technical properties of the dried plant-based food product according to the invention are imparted by the method to manufacture said dried plant-based food product, that is the method according to the invention. The dried plant-based food product according to the invention is a complex product, resulting from a particular group of raw materials processed according to the method according to the invention. Therefore, the features of the dried plant-based food product according to the invention, such as its mechanical properties, rehydration properties, nutrient profile and/or chemical composition and its in-mouth texture and flavour, have to be considered as a whole and cannot be considered in isolation to define it.

It is another object of the present invention to provide rehydrated plant-based food product comprising the dried plant-based food product according to the invention and water.

It is another object of the present invention to provide a method for manufacturing a rehydrated plant-based food product characterised in that it comprises the steps of
[i] obtaining a dried plant-based food product according to the invention, preferably by the method according to the invention, and
[ii] rehydrating said dried plant-based food product according to the invention.

In the context of the invention, the expressions "rehydrated" and "rehydrating" when referred to a food product mean that the water content in the food product has been or is increased by means of contacting the product with water, broth, or any other edible aqueous solution and waiting for the food product to absorb as much water as it can. Said water, broth or any other edible aqueous solution are absorbed by the food product and remain therein providing a rehydrated or wet food product.

The rehydrated plant-based food product according to the invention is elastic, stable (i.e. does not dissolve during rehydration or when cooked), and that has a neutral pleasant taste and an appealing soft and elastic in-mouth texture. In addition, due to its structure and capacity to absorb liquid, the flavour profile of the rehydrated plant-based food product according to the invention can be adjusted by using different rehydrating media, such as for example broth or flavouring liquid media. In addition, due to its neutral taste and its capacity to absorb liquid the rehydrated plant-based food product according to the invention acquires the flavours of the recipes it is used for.

It is another object of the present invention to provide a food product comprising a dried plant-based food product according to the invention or comprising a rehydrated plant-based food product according to the invention.

The dried plant-based product according to the invention, and the rehydrated plant-based food product can be used as ingredients to prepare other more elaborate foods, alone or together with additional ingredients. They can be used, for example, as protein source and texturing ingredient in such elaborate foods. Examples of foods where the dried plant-based product and the rehydrated plant-based product according to the invention can be used are sauces, such as Bolognese sauce, hamburgers, meatballs, chilli-like dishes, soups, doughs, filings, among others.

The invention further includes several preferred features that are object of the dependent claims and the utility of which will be highlighted hereinafter in the detailed description of preferred embodiments of the invention.

In the context of the invention, the expression "% w/w" refers to percent by weight. Unless indicated, "% w/w" can be understood as "g / 100 g".

Preferably, said plant seed germ-rich fraction is a plant seed germ-rich fraction obtained from plant seeds by aqueous thermal extraction or acid extraction. More preferably, said plant seed germ-rich fraction is a plant seed germ-rich fraction obtained from plant seeds by acid extraction.

Preferably, the plant seed germ-rich fraction comprises an amount of protein of equal to or higher than 20% w/w with respect to the dry weight of said plant-seed germ-rich fraction. More preferably, the plant seed germ-rich fraction comprises an amount of protein of equal to or higher than 40% w/w with respect to the dry weight of said plant-seed germ-rich fraction.

Preferably, the plant seed germ-rich fraction comprises an amount of protein of equal to or higher than 20% w/w with respect to the wet weight of said plant-seed germ-rich fraction. More preferably, the plant seed germ-rich fraction comprises an amount of protein of equal to or higher than 40% w/w with respect to the wet weight of said plant-seed germ-rich fraction.

Preferably, the fermentation is carried out at a temperature between 25°C and 45°C. More preferably, the fermentation is carried out a temperature between 38°C and 43°C.

Preferably, in step [d], the fermented germ extrudate obtained in step [c] is dried at a temperature equal to or more than 60°C. More preferably, in step [d], the fermented germ extrudate obtained in step [c] is dried at a temperature comprised between 80°C and 160°C.

As explained above, the drying temperature is important to ensure structural integrity of the obtained dried plant-based food product according to the invention and is a factor contributing to its final technical properties. Considering the high protein content of the dried plant-based food product according to the invention, protein denaturation is likely the main driver of its structural stabilization. Therefore, for optimal structural stabilization of the dried plant-based food product according to the invention, drying temperatures of equal to or more than 45°C, preferably of equal to or more than 60°C, are needed to drive protein denaturation. A drying temperature equal to or more than 60°C allows to obtain a sufficient coalescence of the final dried plant-based food product obtained and at the same contribute to its sterilisation thanks to the pasteurisation effect it provides. In a further preferred embodiment of the invention a drying temperature between than 80°C and 160°C allows for a sufficient coalescence of the final dried plant-based food product, which tends to improve upon increasing the drying temperature, while providing a very effective sterilization effect and further allowing to fine tune the mechanical properties and the flavour and in-mouth texture of the final properties.

Preferably, said plant seed germ-rich fraction is obtained from seeds of a plant belonging to the Fabaceae family, more preferably from seeds of a plant belonging to a genus selected from the group consisting of *Prosopis sp., Caesalpinia sp., Ceratonia* sp., and *Cyamopsis.* Even more preferably, from seeds of a plant selected from the group consisting of *Prosopis alba, Prosopis nigra, Ceratonia siliqua, Cyamopsis tetragonoloba,* and *Caesalpinia spinosa.* These preferred plant-based germ-rich fractions are by-products of the production of gum, for example, Locust gum produced from seeds of plants from *Prosopis sp.* and *Ceratonia sp.,* Tara gum produced from seeds of plants from *Caesalpinia sp.,* or Guar gum produced from seeds of plants from *Cyamopsis sp.* In these preferred embodiments, the method according to the invention is particularly advantageous as it allows the valorisation of these raw material, that is the preferred plant-seed germ-rich fractions mentioned above. These raw materials are often discarded and/or have no use in the human food industry, as they are considered low value food products, hard to process, and normally used as additives in animal feed.

Preferably, in step [b] the water content is reduced to a water content equal to or less than 75% w/w with respect to the weight of the extrudable fermented germ solid fraction, preferably to a water content equal to or less than 70% w/w, and more preferably to a water content comprised between 70% w/w and 40% w/w. Especially preferably in step [b] the water content is reduced to a water content comprised between 70% w/w and 50% w/w with respect to the weight of the extrudable fermented germ solid fraction. These water contents allow for the extrudable fermented germ solid fraction to be readily formed without collapsing while enough microorganisms to be retained within the formed extrudate.

Preferably, step [b] further comprises the steps of recovering the solid fraction of the fermented germ broth obtained in step [a] by filtration means, to obtain a fermented germ filtrate fraction, and further reducing the water content of the fermented germ filtrate fraction obtained in step [d1] by pressure-based liquid removal means, to obtain an extrudable fermented germ fraction. In this preferred embodiment, using this sequence of solid-liquid separation means allows for an improved recovery of the fermented germ solid fraction. A filtration step followed by applying pressure to further reduce the water content allows for thinner meshes to be used, which result in less loss of solid material, and a better control of the water content in the final product is obtained without negatively affecting the downstream steps of the method. In this preferred embodiment, the by pressure-based liquid removal means after having partially reduced the water content of the fermented germ broth helps to cohere the material before the extrusion step, contributing to the final properties of the dried plant-based product obtained with the method according to this preferred embodiment.

Preferably, said microorganism suitable for food applications produces and secretes an enzyme with endoglycosidase activity. A microorganism that produces and secretes to the fermentation media one or more enzymes with endoglycosidase activity is particularly advantageous as it allows to break the glycosidic bonds of the carbohydrate chains, such as for example, galactomannan chains, usually present in plant seed germ-rich fractions. Breaking said carbohydrates chains reduces the viscosity of the fermentation broth making it more efficient and improving the handling and processability of the obtained fermentation germ broth.

In another preferred embodiment, said microorganism is selected from the group consisting of lactic acid bacteria, yeast, and bacteria of the genus Bacillus. More preferably said microorganism is selected from the group consisting of bacteria of the genus *Lactobacillus,* bacteria of the genus *Streptococcus,* yeast of the genus *Saccharomyces,* and *Bacillus subtilis.* In a further preferred embodiment, said microorganism is a yeast from the genus *Saccharomyces* or a bacterium of the genus *Lactobacillus or* a bacterium of the genus *Streptococcus.* Even more preferably, said microorganism is selected from the group consisting of *Saccharomyces cerevisiae, Lactobacillus bulgaricus, Streptococcus thermophilus.*

These preferred microorganisms are microorganisms suitable for food applications, as they are commonly used in food industries such as the bakery industry and the dairy industry. They exhibit good fermentative capacity and are particularly well suited to modify the raw materials used in the method according to the invention to achieve both a high protein nutrient profile and an appealing flavour. In particular, these microorganisms have a particularly high percentage of protein, which allows to further increase the protein content of the final product and contribute to providing structure and organoleptic properties as part of the final dried plant-based food product according to the invention.

Preferably, in step [c] the extrudable fermented germ solid fraction obtained in step [b] is formed into a minced meat-like shape, a pasta-like shape, a sheet-like shape, a ribbon like shape, or a rod-like shape.

In the context of the invention, a "mince-like shape" is to be understood as a shape like the shape of minced food, for example, minced meat, which generally can be described as ribbons having a cross section with a cylindrical shape or other shapes, and a variable length. Said ribbons may break while being formed leading to a mixture of shorter and longer ribbons. The skilled person knows the equipment and the methods to obtain such mince-like shapes, for example, a meat extruder, a meat grinder, or a helical extrusion grinder.

In the context of the invention, a "pasta-like shape" is to be understood as any shape that can be obtained, and is commonly obtained, for pasta. Example of pasta-like shapes are a spaghetti-like shape (ribbons with a cylindrical cross section), a tortellini-like shape (ribbons with a flattened cross section), a macaroni-like shape (hollow tubular shape), and a sheet shape (like pasta for lasagna), among others. The skilled person knows the equipment and the methods to obtain such pasta-like shapes. In the context of the invention, the term "pasta" refers to the type of food typically made from an unleavened dough mixed with water, and formed into sheets or other shapes, then cooked by boiling or baking.

In the context of the invention other shapes are also considered.

Preferably, the dried plant-based food product according to the invention has a water content equal to or less than 25% w/w, more preferably equal to or less than 15% w/w, and even more preferably equal to or less than 10% or less, and further preferably, equal to or less than 7.5 % w/w, with respect to the weight of the dried plant-based food product.

Preferably, the dried plant-based food product according to the invention has a water content comprised between 25% w/w and 1% w/w, more preferably a water content comprised between 15% w/w and 2.5% w/w, and even more preferably a water content comprised between 10% w/w and 5% w/w, with respect to the total weight of dried plant-based food product.

Preferably, the dried plant-based food product according to the invention is a high protein food product.

Preferably, the dried plant-based food product according to the invention comprises an amount of protein equal to or more than 20% w/w with respect to the weight of dried plant-based food product. More preferably, the dried plant-based food product according to the invention comprises an amount of protein comprised between 20% w/w and 90% w/w, even more preferably comprised between 40% w/w and 80% w/w.

Preferably, the food product according to the invention comprises said dried plant-based food product according to the invention or said rehydrated plant-based food product according to invention as a plant-based protein source.

Preferably, the food product according to the invention comprises said dried plant-based food product according to invention or said rehydrated plant-based food product according to the invention as a plant-based meat alternative, for example as an alternative to minced meat, minced meat-derived ingredients, or as a cereal alternative, for example as an alternative to cereal-derived doughs.

Preferably, said food product according to the invention is a hamburger-like food product, a meatball-like food product, a minced meat-like food product, a dumpling-like food product, a pastry-like food product, or a pasta-like food product.

In the context of the invention, the expressions "hamburger-like food product", "meatball-like food product", "minced meat-like food product", "dumpling-like food product", "pastry-like food product", and "pasta-like food product" are to be understood as referring to food products having the same look and feel, both aesthetically and in terms of in-mouth texture, as a hamburger, a meatball, minced meat, dumplings, pastries, and pasta, respectively.

It is another object of the invention to provide a use of a plant seed germ-rich fraction obtained from seeds of a plant belonging to a genus selected from the group consisting of *Prosopis sp., Caesalpinia sp., Ceratonia* sp., and *Cyamopsis,* preferably, obtained from seeds of a plant selected from the group consisting of *Prosopis alba, Prosopis nigra, Ceratonia siliqua, Cyamopsis tetragonoloba,* and *Caesalpinia spinosa,* for the manufacture of meat alternatives, also known as meat substitutes, meat analogues, or plant-based meat. The above-described features, related to the method and the food products according to the invention, are to be considered preferred features, each independently, with reference to the use according to the invention.

Likewise, the invention also includes other features of detail illustrated in the detailed description of several embodiments of the invention.

### Brief description of the figures

Figure 1 shows a photograph of a first embodiment of the dried plant-based food product of the invention. Figure 1A is a magnified view of Figure 1.
Figure 2 shows a photograph of a first embodiment of the rehydrated plant-based food product according to the invention during rehydration.
Figure 3 shows a photograph of a fourth embodiment of the dried plant-based food product of the invention.
Figure 4A shows a photograph of individual pellets of the first embodiment of the dried plant-based food product of the invention shown in Figure 1. Figure 4B shows a photograph of individual granules of the fourth embodiment of the dried plant-based food product of the invention shown in Figure 2.
Figure 5 shows a photograph of a second embodiment of the rehydrated-plant based food product according to the invention during rehydration.
Figure 6 shows a photograph of a comparison between a comparative dried plant-based food product (FIG.6A), the first embodiment (FIG.6B) and a fifth embodiment (FIG.6C) of the dried plant-based food product according to the invention.
Figure 7 shows a photograph of a comparison between a comparative rehydrated plant-based food product (FIG.7A), and the first embodiment (FIG.7B) and the fifth embodiment (FIG.7C) of the rehydrated plant-based food product according to the invention after rehydration.
Figure 8 shows a photograph of an embodiment of a use according to the invention. In this example, a plant seed germ-rich fraction obtained from *Ceratonia siliqua,* processed into dried food product according to the invention and rehydrated is shown as part of a pastry recipe.

### Detailed description of embodiments of the invention

### Example 1:

Examples of raw materials to obtain a plant seed germ-rich fraction suitable for the method and the use according to the invention.

Plant seeds can be used as raw materials to obtain a plant seed germ-rich fraction suitable to be used in the method for manufacturing a dried food product according to the invention.

Seeds from leguminous plants (Fabaceae) are preferred. For example, plant seed germ-rich fractions can be obtained from plants seeds obtained from plants belonging to a genus selected from the group consisting of *Prosopis, Caesalpinia, Ceratonia,* and *Cyamopsis,* which also show a high content of protein as shown below. Preferred examples of plant seeds from which plant seed germ-rich fractions can be obtained are plants seeds from the following species: *Prosopis alba (carob seeds), Prosopis* nigra *(carob seeds), Ceratonia siliqua (carob seeds), Cyamopsis tetragonoloba (Guar seeds),* and *Caesalpinia spinosa (Tara seeds).*

In terms of seed components, the compositions provided in Tables 1 and 2 are examples of compositions of plant seeds suitable to be used as raw materials to obtain plant seed germ-rich fractions suitable for the method according to the invention. Examples of methods for the fractionation of said plant seeds are described in the referenced publications and are briefly explained below and in Example 2.

**Table 1**

| | **Tara seeds 1** | **Carob seeds 1** | **Guar seeds 1** | **Tara seeds 2** |
|---|---|---|---|---|
| Hull | 38 | 30-38 | 14-17 | 38-40 |
| Endosperm | 30 | 42-46 | 35-40 | 30-34 |
| Germ | 32 | 23-25 | 42-47 | 27-30 |

*as described in* Del Re-Jimenez and Amado (1989) Food Hydrocolloids Vol. no.2 pp. 149-156.

Tara seeds 1 and Tara seeds 2 were subjected to manual separation to obtain a tara seed germ-rich fraction. Carob seeds 1 were subjected to acid treatment to obtain a carob seed germ-rich fraction. Guar seeds 1 were subjected to mechanical treatment to obtain a guar germ-rich fraction.

**Table 2**

| | **Carob seeds 2** | **Carob seeds 3** | **Carob seeds 4** | **Carob seeds 5** |
|---|---|---|---|---|
| Husk | 29-35 | 21-24 | 30-38 | 30-33 |
| Endosperm | 37-48 | 51-61 | 42-46 | 42-46 |
| Germ | 17-23 | 18-25 | 23-25 | 23-25 |

as *described in* Aubin Dakia et al. (2007) Food Chemistry 102 1368-1374*.*

Carob seeds 2 were subjected to acid treatment to obtain a carob seed germ-rich fraction. Carob seeds 3 were subjected to aqueous thermal treatment to obtain a carob seed germ-rich fraction. As described in Aubin Dakia et al. (2007) Food Chemistry 102 1368-1374, Carob seeds 4 and Carob seeds 5 were processed as described in "Herald, C. T. (1986) In M. Glicksman (Ed.). Food Hydrocolloids (Vol. III, pp. 161-170). Boca Raton, FL: CRC Press", and "Neukom, H., (1988). Carob bean gum: properties and applications. In: P. Fito, A. Mulet (Eds.), Proceedings of the III International Carob Symposium (pp. 551-555) Valencia, Spain", respectively.

Other plant seeds suitable to be used in the method and the use according to the invention, for example other seeds from the Fabaceae family, may have compositions in terms of seed components that differ from the examples showed above. Notwithstanding this, these seeds allow to obtain germ-rich fractions that can be used in the method and the use according to the invention.

### Example 2:

Examples of obtention methods of plant seed germ-rich fractions suitable for the method and the use according to the invention.

The following methods, as described in the referenced publications, are provided as examples of methods that can be used to obtain plant seed germ-rich fractions suitable for the method and the use according to the invention. For example, the following methods adapted from the method described in Aubin Dakia et al. (2007) Food Chemistry 102 1368-1374 can be used.

### Aqueous thermal extraction

A carob seed germ-rich fraction can be obtained from whole carob seed by aqueous thermal extraction by pre-treating 100 g of whole plant seeds immersed in 800 mL of boiling water during 60 min. The components (husk, endosperm and germ) of the swelled seeds, without tegument disruption, are then easily separated manually. A carob seed germ-rich fraction in the form of a pure flour of germ (Carob meal 1) was then obtained by drying (100°C/30 min) and crushing the germ fraction.

The overall composition of the carob seed germ-rich fraction obtained by this method is shown in Table 3:

**Table 3**

| **Carob meal 1** | % w/w (on the basis of dry weight) |
|---|---|
| Moisture | 5.9 ± 0.4 |
| Ash | 5.6 ± 0.1 |
| Crude protein (N x 6.25) | 67.1 ± 0.4 |
| Lipids (neutral and polar) | 8.2 ± 0.6 |
| Carbohydrates (nitrogen free extract) | 13.2 ± 0.4 |
| Crude energy (kJ/g) | 17.9 ± 0.3 |
| Lipids (neutral) | 7.1 ± 0.5 |
| Polar lipids | 1.1 ± 0.6 |

### Acid extraction

A carob seed germ-rich fraction can be obtained by acid extraction by pre-treating 100 g of carob seeds in 60 mL of sulphuric acid (H₂SO₄/H₂O 60/40 v/v) at 60°C during approximately 60 min, and then washing the mass containing the peeled seeds extensively with water and rubbing it to eliminate the carbonised husk, through a 2 mm sieve. The dehusked seeds can be dried (100°C/30 min) and then briefly crushed (10 seeds/2-3 s) with a laboratory mill (model MF 10, IKA, Staufen, Germany) to separate the two endosperms (or albumen) and to release the germ which was detached in pieces because it was more friable. The manual separation (facilitated by a preliminary sifting operation using a 1 mm sieve) of some large pieces of germs, makes it possible to obtain a carob seed germ-rich fraction in the form of pure flour of germ after crushing (Carob meal 2).

The overall composition of the carob seed germ-rich fraction obtained is by this method is shown in Table 4:

**Table 4**

| **Carob meal 2** | % w/w (on the basis of dry weight) |
|---|---|
| Moisture | 6.5 ± 0.6 |
| Ash | 6.0 ± 0.4 |
| Crude protein (N x 6.25) | 59.5 ± 0.3 |
| Lipids (neutral and polar) | 7.1 ± 0.1 |
| Carbohydrates (nitrogen free extract) | 20.9 ± 0.4 |
| Crude energy (kJ/g) | 18.3 ± 0.4 |
| Lipids (neutral) | 5.4 ± 0.3 |
| Polar lipids | 1.7 ± 0.2 |

Another example of a plant seed germ-rich fraction can be obtained from carob seed by acid extraction. This involves an acidic pre-treatment of the seeds, like the one mentioned above, and the removal by manual separation of the endosperm pieces only. A carob seed germ-rich fraction is obtained in the form of a germ flour (Carob meal 3) that is slightly contaminated with residues of husk and of endosperm, assimilable to a plant seed germ-rich fraction obtainable by industrial procedures.

The overall composition of the carob seed germ-rich fraction obtained by this method is shown in Table 5.

**Table 5**

| **Carob meal 3** | % w/w (on the basis of dry weight) |
|---|---|
| Moisture | 8.3 ± 0.1 |
| Ash | 6.5 ± 0.1 |
| Crude protein (N x 6.25) | 54.7 ± 0.5 |
| Lipids (neutral and polar) | 6.6 ± 0.3 |
| Carbohydratesa (nitrogen free extract) | 23.9 ± 0.2 |
| Crude energy (kJ/g) | 17.5 ± 0.3 |
| Lipids (neutral) | 5.2 ± 0.3 |
| Polar lipids | 1.4 ± 0.3 |

The above examples refer to the obtention of exemplary plant seed germ-rich fractions from carob seeds as raw material for the method and the use according to the invention. The skilled person knows how to adapt them to obtain germ-rich fractions from other plant seeds suitable to be used in the method and the use according to the invention.

Methods that can be used for the chemical analysis of the plant seed germ-rich fractions suitable for the invention are described in Aubin Dakia et al. Food Chemistry 102 (2007) 1368-1374. Particularly, the methods described therein refer to carob seed germ-rich fractions, but the skilled person can readily adapt them for the chemical analysis of other plant seed germ-rich fractions suitable for the invention.

The crude protein (N x 6.25) content is determined for all the examples by the Kjeldahl procedure. For example, from 60 mg of germ by nitrogen determination after mineralization (with a 1000 Kjeltabs MQ tablet and a Digestion System 20, 1015 Digester, Tecator AB, Höganäs, Sweden) and distillation (by a Kjeltec Auto 1030 Analyser, Tecator AB, Höganäs, Sweden).

Other examples of plant seed germ-rich fractions can be obtained from seeds of plants belonging to the Fabaceae family are plant seed germ-rich fractions obtained from Carob seeds from *Ceratonia siliqua* (Carob meal 4 and Carob meal 5), Guar seeds from *Cyamopsis tetragonoloba* (Guar meal 1), and Tara seeds from *Caesalpinia spinosa* (Tara meal 1), which have respectively the overall compositions shown in Table 6, as described in Del Re-Jimenez and Amado (1989) Food Hydrocolloids Vol. no.2 pp. 149-156.

**Table 6**

| | % w/w (on the basis of fresh weight) | | | |
|---|---|---|---|---|
| | **Carob meal 4** | **Carob meal 5** | **Guar meal 1** | **Tara meal 1** |
| Moisture | 6.83 | 6.80 | 7.63 | 6.24 |
| Lipids (neutral) | 7.98 | 8.05 | 16.25 | 13.93 |
| Ash | 5.78 | 6.59 | 5.31 | 6.38 |
| Crude protein | 52.99 | 51.68 | 60.08 | 54.32 |
| Carbohydrate (by difference) | 26.42 | 26.88 | 10.73 | 19.13 |
| Water-soluble proteins | 28.85 | 30.54 | 37.00 | |

Another example of plant seed germ-rich fraction obtainable from carob seeds are described in Durazzo et al. (2014), Food Chemistry, 153(), 109-113. (doi:10.1016/j.foodchem.2013.12.045). In this example, the plant seed germ-rich fraction is in the form of a carob germ flour and was obtained from degermination of seeds and grinding of germs. The obtained carob germ flour shows the overall composition showed in Table 7:

**Table 7**

| | % w/w (on the basis of dry weight) |
|---|---|
| Moisture | 7.4 |
| Protein | 24.02 |
| Fat | 2.54 |
| Ash | 4.33 |
| Soluble fiber | 59.5 |
| Insoluble fiber | 29.84 |
| Total fiber | 89.34 |

As the examples show, the obtained plant seed germ-rich fractions show a high content of proteins (24-67%) whatever the used technique of extraction is and whatever the source of plant seeds is.

The above examples are representative of compositions of germ-like fractions obtained from plants belonging to a genus selected from the group consisting of *Prosopis, Caesalpinia, Ceratonia* and *Cyamopsis.* In particular, the specific examples refer to plant seeds from plants of the species *Prosopis alba (Carob), Prosopis nigra (Carob), Ceratonia siliqua (Carob), Caesalpinia spinosa (Tara),* and *Cyamopsis tetragonoloba (Guar).* All germ-rich fractions show a high content of protein as shown above. Other plant seeds suitable to be used in the method and the use according to the invention are, for example, other seeds from plants of the Fabaceae family, which allow to obtain germ-rich fractions using the methods described above, that will have similar compositions as the ones showed above, allowing for varietal variations thereof. These other plant seed germ-rich fractions are also suitable to be used in the method and the use according to the invention and have a high content of proteins (>20% w/w).

### Example 3:

First embodiment of the method for manufacturing a dried food product according to the invention.

### Main materials

- 60 kg of finely ground carob seed germ-rich fraction.
- 300 L of water.
- 600 g yeast (*Saccharomyces cerevisiae*)*.*
- Fermenter equipped with heating and mixing means.
- Press filters.
- Helical extrusion grinder.
- Air Dehydrator with perforated trays.
- Routine laboratory material (beakers, pipettes, etc.).

### Protocol

- Fill the fermenter with 150 L of water.
- Prepare an inoculum by adding 600 g of yeast and disperse it well in a small amount of water in a beaker.
- Start the mixing means of the fermenter at 50 rpm and the heating of the fermenter at a set temperature of 42°C.
- Add the inoculum to the fermenter and fill it up to 300 L with water.
- Add the 60 kg of carob seed germ-rich fraction stepwise to the fermenter so that is dispersed by the mixing means.
- Once the set temperature (42°C) has been reached, incubate the mix for 12 hours.
- Once the fermentation is done, transfer the obtained fermentation broth to suitably sized filter bags, such as for example, the ones used to make cheese or butter, to separate the wet fermentation broth solid fraction from the fermentation broth liquid fraction.
- Press the wet fermentation broth solid fraction obtained in the previous step to obtain pressed cakes with a water content of 65%.
- Once pressed, grind the cakes to obtain a fermented carob-germ extrudate. In this example, the use of the helical extrusion grinder allows to obtain an extrudate formed in cylindrically shaped ribbons or fragments thereof, of about 2-5 mm in diameter and variable length, which can be collected in the perforated trays for drying. Other shapes can be obtained by using different extruding equipment and/or varying the extrusion matrices.
- Dry the fermented carob-germ extrudate obtained in the previous step at 90°C for 3 hours to obtain a dried plant-based food product according to the invention in the form of rod-like granules or pellets.

### Example 4:

First embodiment of the dried plant-based food product according to the invention.

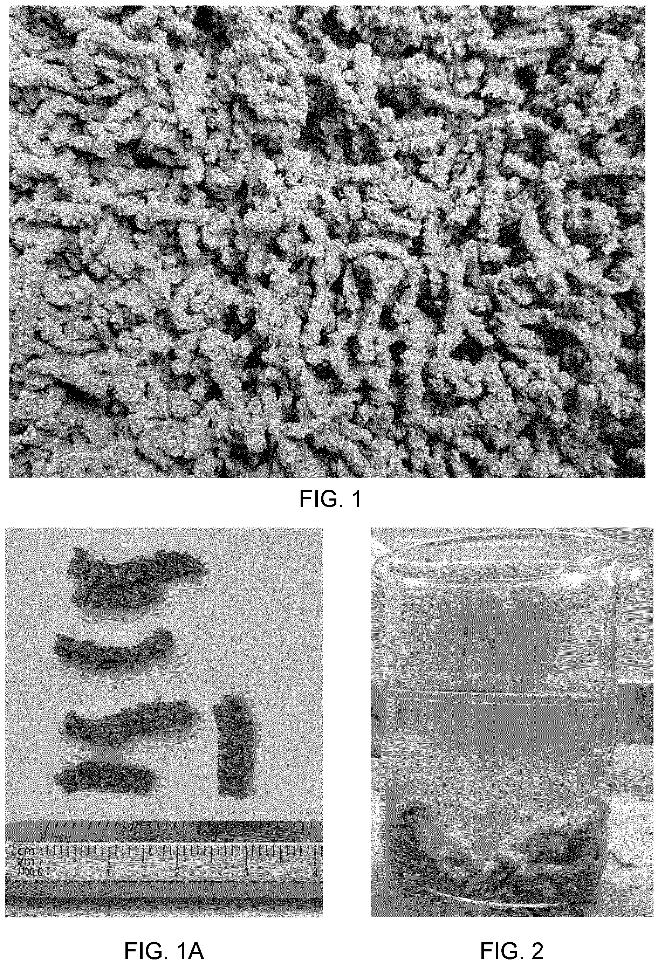

Figure 1 shows a sample of a first embodiment of the dried plant-based food product according to the invention obtained using the method described in Example 3. In this embodiment, the plant-based food product according to the invention is in the form of dried rod-like pellets of a size of about 0.5-3 cm in length and 2-5 mm in thickness or diameter. Furthermore, the pellets have an elastic structure when pressed with two fingers, and a fibrous structure when broken and inspected closely. This allows them to maintain the structural integrity and to not easily break when manipulated, packed, and transported.

Table 8 shows the chemical composition of the first embodiment of the dried plant-based food product according to the invention described above. Units refer to g of component per 100g of dried plant-based food product.

**Table 8**

| | | |
|---|---|---|
| Total sugars | 1.7 | g/100g |
| Total fibre (high mw fraction) | 19.9 | g/100g |
| Water content | 6.7 | g/100g |
| Ash | 4 | g/100g |
| Fat | 9 | g/100g |
| Crude protein (Nx6.25) | 64 | g/100g |
| Salt (from sodium) | 0.103 | g/100g |
| Sodium | 0.041 | g/100g |

In this first embodiment, the dried plant-based food product according to the invention has a high content of protein (>20% w/w of protein with respect to the weight of dried plant-based food product). In this embodiment, the dried plant-based food product according to the invention has a content of protein above 60% w/w with respect to the weight of dried plant-based food product, that can be considered very high.

### Example 5:

Second embodiment of a method for manufacturing a dried plant-based food product according to the invention and second embodiment of a dried plant-based food product according to the invention.

In a second embodiment of the method according to the invention, a microorganism inoculum containing *Lactobacillus bulgaricus* was used for the fermentation. The rest of the steps were carried out as described above in Example 3.

With this method, a second embodiment of the dried plant-based food product according to the invention was obtained.

Starting from the same carob germ-rich fraction as raw material, another batch of the dried plant-based food product according to the invention was obtained by the method described in Example 3, using *Saccharomyces cerevisiae* as inoculum, for comparison.

The protein compositions of this second and third embodiments of the dried plant-based food product according to the invention, obtained by a method according to the invention, are shown in Table 9.

**Table 9**

| Inoculum | *Lactobacillus* | *Saccharomyces* |
|---|---|---|
| Crude protein (Nx6.25) (g/100g) | 57.2 | 60.4 |

The use of an inoculum containing *Saccharomyces sp.* resulted in a fermentation germ broth with a lower viscosity than the broth obtained with *Lactobacillus sp.* Handling during the water reduction step, and filtration of the fermentation germ broth were easier and more efficient when fermenting with *Saccharomyces* than when fermenting with *Lactobacillus.* This is attributed among other factors, to the ability of the used *Saccharomyces* strain to produce and secrete enzymes with endoglycosidase activity.

Both dried plant-based food products, irrespective of the inoculum used, showed the same advantageous mechanical and rehydration properties explained above. Both dried plant-based food products allowed to obtain rehydrated plant-based food products according to the invention with the advantages explained above in terms of the stability and palatability.

### Example 6:

Microbiological analysis of the dried plant-based food product according to the invention.

The microbiological analysis shown in Table 10 have been obtained from a sample of the first embodiment of the dried plant-based food product of Examples 3 and 4.

**Table 10**

| *Salmonella spp.* Detection | Not detected | /25g |
|---|---|---|
| B-glucuronidase positive *Escherichia coli* in-plate count | <10 | ufc/g |
| Coagulase-positive staphylococci in-plate count | <10 | ufc/g |
| Microorganisms in-plate count at 30°C | <1.0x102 | ufc/g |
| Moulds and yeasts in plate counts | <10 | ufc/g |
| presumptive Bacillus cereus in-plate count at 30°C | <10 | ufc/g |

The microbiological profile showed in Table 10 can be considered representative of the microbiological properties of the dried plant-based food product according to the invention. The results shown are in line with the fact that the dried plant-based food product according to the invention exhibits a long shelf-life and can be stored at room temperature for a long period of time (12 months) without losing its properties or perishing. The structural characteristics of dried plant-based food product according to the invention are also maintained after long-term storage, for example, after 12 months.

### Example 7:

First embodiment of the method for manufacturing a wet or rehydrated plant-based food product according to the invention and first embodiment of a wet or rehydrated plant-based food product according to the invention.

The dried plant-based food product obtained by any of the methods described above can be rehydrated by immersing it in an aqueous solution and leaving it to absorb water until the plant-based food product reaches saturation. That is, until no more water is absorbed. The resulting rehydrated or wet food product according to the invention can then be recovered by discarding any non-absorbed water remaining in the container used.

For example, a first embodiment of a wet plant-based food product according to the invention can be obtained by immersing the dried plant-based food product obtained in Example 3 in water as showed in Figure 2. After reaching saturation, the resulting wet or rehydrated plant-based food product has a soft but elastic texture and does not dissolve. While some turbidity can be observed in the remaining water, after rehydration is completed, the rehydrated plant-based food product maintains its structure and does not easily break when manipulated, for example, when gently pressed with two fingers or when gently mixed, for example, with other food. Upon consumption, the wet or rehydrated plant-based food product presents an elastic and pleasant in-mouth texture and is easy to chew. The wet or rehydrated plant-based food product also exhibits a neutral pleasant taste that can be easily complemented as desired by flavouring the rehydration medium according to each specific need. For example, other embodiments of the rehydrated plant-based food product can be obtained by using meat or vegetables broth, or by using water with added condiments, to carry out the rehydration process.

### Example 8:

Third embodiment of the method for manufacturing a dried food product according to the invention, fourth embodiment of the dried food product according to the invention and second embodiment of a wet or rehydrated plant-based food product according to the invention.

### Main materials

The same main materials described above in Example 3 were used. Additionally, the following materials were used:
- 1.2 kg of powdered onion
- Dough mixer

### Protocol

The same protocol as in Example 3 was used, with the following modified steps:
- The pressing of the wet fermentation broth solid fraction obtained in the previous step was to obtain pressed cakes with a water content of 70%.
- Once pressed, the cakes were transferred in the dough mixer and the 1.2 kg of powdered onion was added. The dough was mixed for 10 minutes.
- The dough obtained in the previous step was ground to obtain a flavored fermented carob-germ extrudate formed. The dough was the dough was initially shaped in cylindrically shaped ribbons or fragmented ribbons, of about 2-5 mm in thickness or diameter, which were collected in the perforated trays for drying.
- Drying the flavoured fermented carob-germ extrudate obtained in the previous step was done at 90°C for 3 hours to obtain a fourth embodiment of the dried plant-based food product according to the invention.

### Results

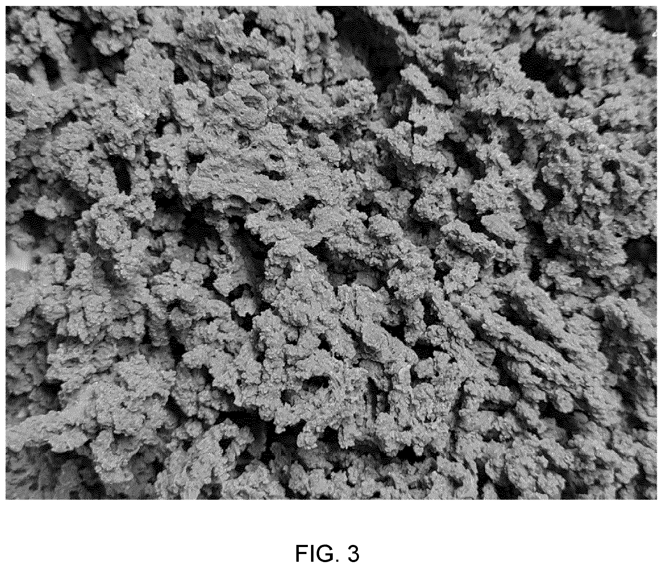

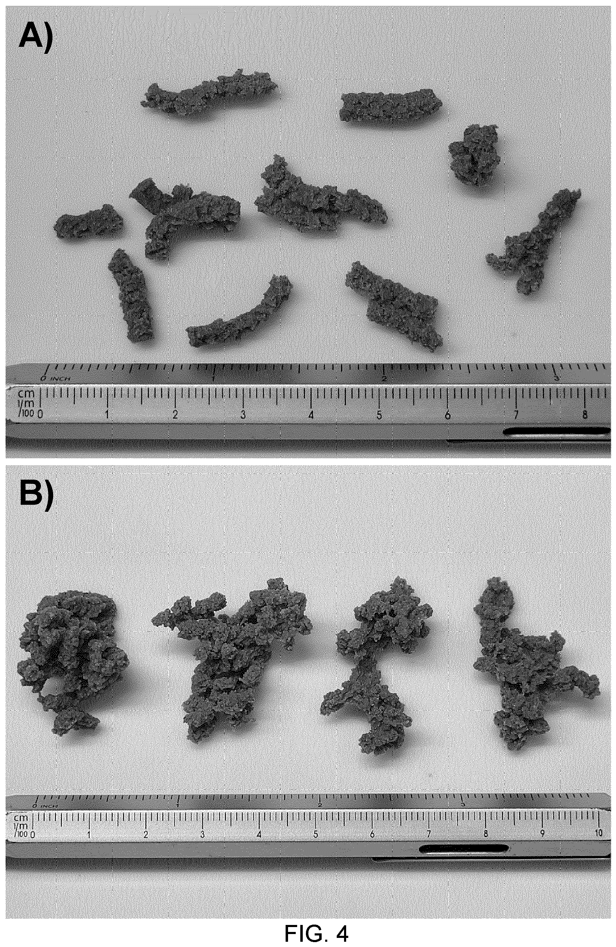

Figure 3 shows a representative sample of the fourth the dried plant-based food product obtained from a carob seed germ-rich fraction using the third embodiment of the method according to the invention described in this example. Figure 4 shows the comparison of a sample of the dried plant-based food product according to the invention obtained in Example 3 and a sample of the dried plant-based food product according to the invention obtained in this Example 7. When compared with the dried plant-based food product obtained in Example 3, the product obtained with this embodiment of the method according to the invention does not have a complete pelleted texture but conserves a granular texture with some clumps or granules of slightly compacted material. The moisture (70%) of the extrudate used in the grinding step was higher than in Example 3 and caused the collapse of some of the particles obtained during the extrusion step, which came together and adhered to each other when placed on the trays before the drying step. Notwithstanding this, the granules of dried plant-based food product hereby obtained shows the same advantageous mechanical and rehydration properties explained above and allows to obtain a rehydrated plant-based food product according to the invention with the advantages explained above in terms of the stability and palatability. Additional steps after drying can be included to recover larger granules or clumps, which can then be processed to obtain a homogenously particulate product. With a fermented germ broth or dough with a water content above a 75% moisture, no particulate fermented germ extrudate. This example also shows that the method according to the invention allows for the incorporation of additional flavouring ingredients into the final product.

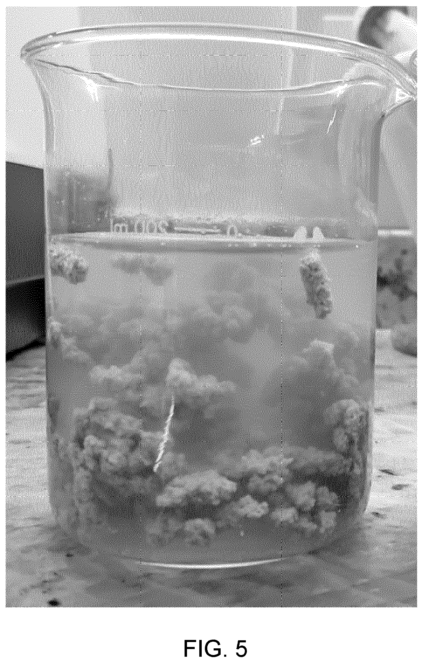

Figure 5 shows a second embodiment of the wet or rehydrated plant-based food product according to the invention, obtained as described above in Example 7 from the fourth embodiment of the dried plant-based food product according to the invention described above.

### Comparative example 1:

### Main materials

The same main materials as the ones described above in Example 3 were used.

### Protocol

The same protocol as in Example 3 was used with the following modified steps:
- Dry the fermented carob-germ extrudate in the form obtained in the previous step at 40°C for 12 hours to obtain a comparative dried plant-based food product.

### Results

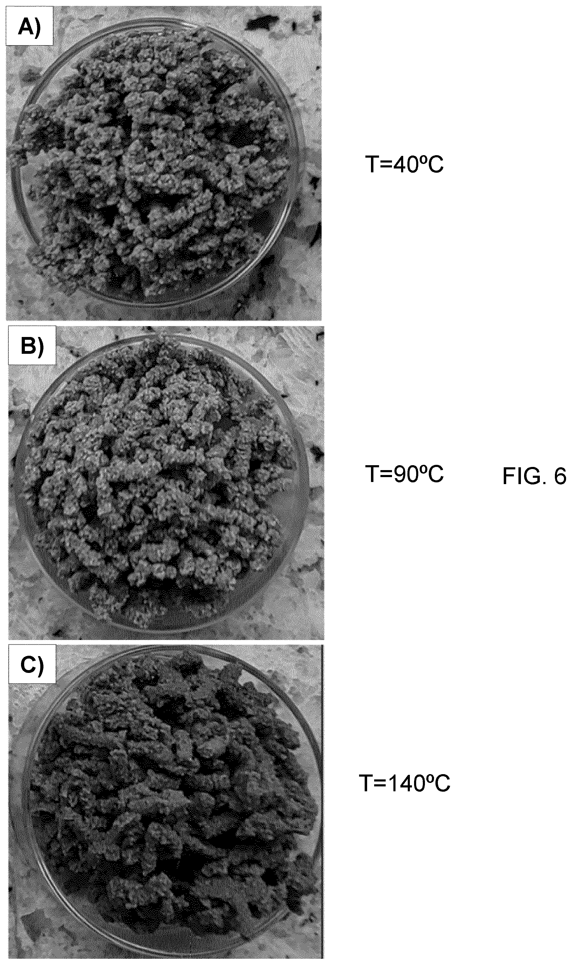

The comparative dried plant-based food product obtained with this comparative method was not completely homogenous when compared with the dried plant-based food product according to the invention obtained in Example 3. A particulate dried plant-based food product was obtained, similar in appearance to the dried plant-based food product according to the invention obtained in Example 3 as shown when comparing Figures 6A and 6B. However, the comparative dried food product was more brittle and less elastic when compared with the dried food product according to the invention obtained in Example 3.

### Comparative example 2

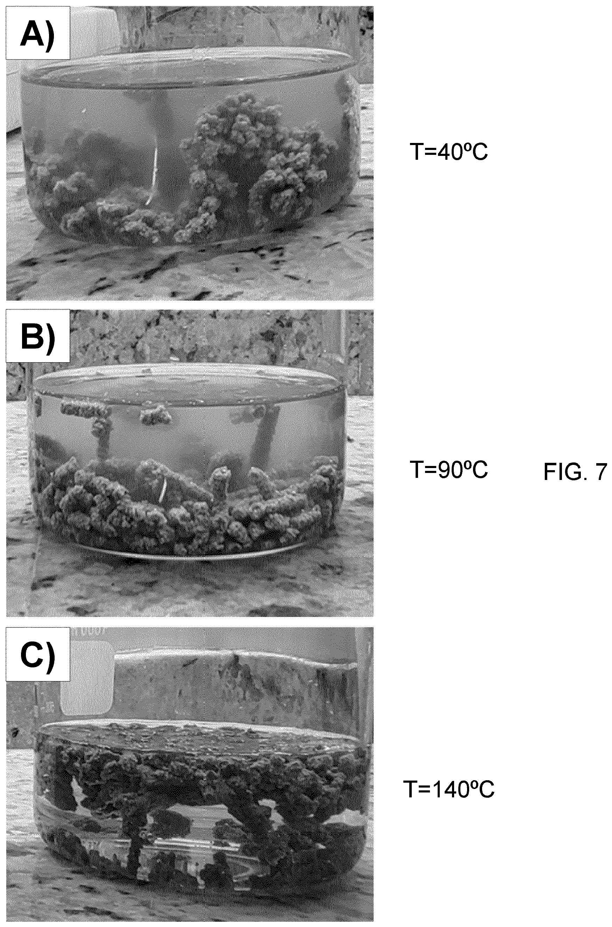

The embodiment of the rehydrated plant-based food product according to the invention from Example 7 was compared with a comparative rehydrated plant-based food product, obtained from the comparative dried plant-based food product obtained by the method described in the Comparative example 1 above. Both rehydrated plant-based food products were obtained by immersing the dried products in water until the products were fully rehydrated as showed in Figure 7A and 7B.

The comparative wet or rehydrated plant-based food product showed a softer colour, and practically dissolved in the rehydration mixture, which was more turbid, when manipulated. The remaining comparative wet product showed a mushy and not elastic consistency and was difficult to manipulate. In contrast, the wet plant-based food product according to the invention maintained its soft and elastic texture, did not dissolve, and maintained its structure without easily breaking when manipulated, for example, when gently pressed with two fingers or when gently mixed with other food. Upon consumption, the flavour and the in-mouth texture of the comparative wet plant-based food product were less pleasant when compared with the wet plant-based food product according to the invention. In contrast, the rehydrated plant-based food product according to the invention maintained its elastic, pleasant and easy to chew in-mouth texture as well as its neutral pleasant flavour.

The examples above show that the dehydration temperature is critical to obtain the optimal properties observed in the dried and wet plant-based food products according to the invention. A drying temperature of 40°C (Comparative example 1), while sufficient to progressively reduce the water content of the comparative product, showed to be insufficient to stabilize the internal structure of the product even during a long drying period. This shows that considering the high protein content of the dried plant-based food product according to the invention, protein denaturation is likely the main driver of its structural stabilization. Therefore, for optimal structural stabilization of the dried plant-based food product according to the invention, drying temperatures equal to or more than 45°C or above, preferably equal to or more than 60°C, are needed to drive this protein denaturation.

Example 9: Fifth embodiment of the method for manufacturing a dried plant-based food product according to the invention.

### Materials

Same as Example 3 above.

### Protocol

Same as Example 3 above with the following modifications:
- the drying step was performed in two stages, a first stage at 90°C for 1.5 hours followed by a second stage at 140°C for 1 hour.

### Results

A fifth embodiment of the dried plant-based food product according to the invention was obtained by the method described in this example and is showed in Figure 6C, dish marked T=140°C. For comparison, Figure 6 also shows in the middle dish a dried plant-based food product according to the invention obtained by the embodiment of the method according to the invention described in Example 3 (FIG. 6B). Also, for comparison, Figure 6 also shows a sample of the comparative dried food product obtained in Comparative example 1 (FIG. 6A).

This fifth embodiment of the dried plant-based food product according to the invention showed a darker colour than the first embodiment described above in Example 4 but the pellets continued to show an elastic texture, maintain their structure, and did not easily break when manipulated.

Example 10: Third embodiment of a wet plant-based food product according to the invention.

A third embodiment of a wet or rehydrated plant-based food product according to the invention is shown in Figure 7C. This was obtained as explained above, by immersing the dried plant-based food product according to the invention obtained in Example 9, shown in Figure 6C, in water until saturation of the pellets was reached.

### Comparative example 4:

For comparison, Figure 7 shows the comparative wet plant-based food product obtained from the comparative dried food product obtained by the method described in the Comparative example 1 above (FIG.7A), as well as a wet or rehydrated plant-based food products according to the invention obtained from the dried plant-based food products obtained by the methods of Example 3 and of Example 9 respectively (FIG. 7B and 7C). Rehydration for the three dried plant-based products was performed by immersing each dried plant-based food product in water until full rehydration was achieved. That is until the products were saturated with water and no more water was absorbed.

Both embodiments of the dried plant-based food product according to the invention showed good rehydration properties (FIG. 7B and 7C). The resulting wet or rehydrated food products exhibited a soft and elastic texture, did not dissolve, and maintained its structure without easily breaking when manipulated, for example, when gently pressed with two fingers or when gently mixed with other food. A higher drying temperature (140°C vs 90°C) showed to be preferable as less suspended material (less turbidity) could be observed during rehydration (FIG. 7C). Upon consumption, both embodiments of the dried plant-based food product according to the invention maintain the elastic, pleasant and easy to chew in-mouth texture as well as the neutral pleasant flavour, slightly more intense in the embodiment at a higher temperature.

### Example 11: Use of a plant seed germ-rich fraction obtained from Ceratonia siliqua seeds to manufacture a meat alternative.

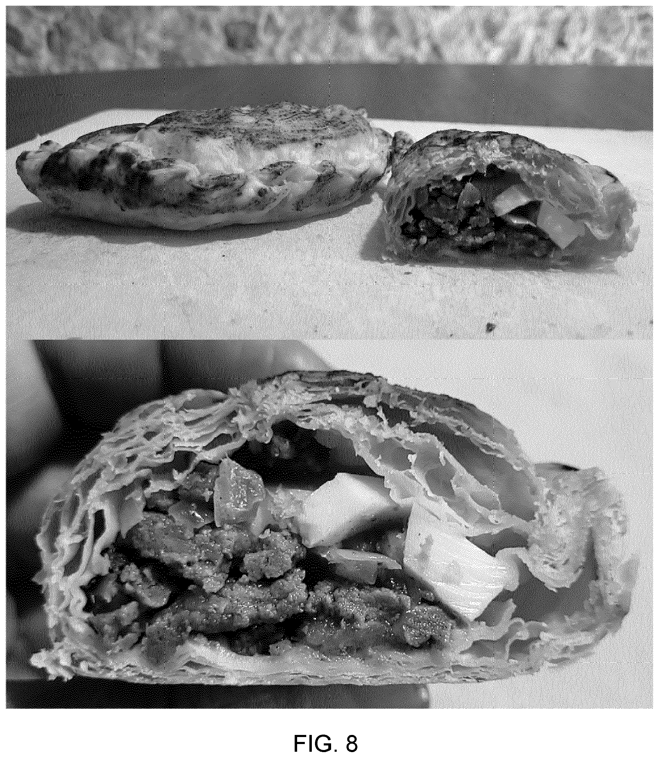

Figure 8 shows a first embodiment of the use according to the invention. In this example, a pastry was obtained using a plant seed germ-rich fraction obtained from *Ceratonia siliqua* as a meat alternative in the filling. The plant seed germ-rich fraction obtained from *Ceratonia siliqua* was processed according to the method according to the invention explained in Example 3 to obtain a dried plant-based food product according to the invention. After rehydration, as explained in Example 7, the rehydrated plant-based food product obtained was as then incorporated into a pastry recipe as a meat analogue. The result was a pastry with a rich feeling, which retained the cooking juices of all the ingredients. The filling of the pastry had a look and an in-mouth texture very similar to the one of a meat pastry. While in this example the germ-rich fraction was processed using the method according to the invention, this is considered a preferred embodiment of the use according to the invention, and other forms of processing, known, or that could be developed are considered encompassed by the teachings of the invention. Germ-rich fractions obtained from seeds of a plant belonging to a genus selected from the group consisting of *Prosopis sp., Caesalpinia sp., Ceratonia* sp., and *Cyamopsis,* preferably, germ-rich fractions obtained from seeds of a plant selected from the group consisting of *Prosopis alba, Prosopis nigra, Ceratonia siliqua, Cyamopsis tetragonoloba,* and *Caesalpinia spinosa,* can in the same way be used for the manufacture of meat alternatives.

## Claims

1. A method for manufacturing a dried plant-based food product, **characterized in that** it comprises the following steps:
[a] fermenting a plant seed germ-rich fraction to obtain a fermented germ broth, using a microorganism inoculum, said microorganism inoculum comprising a microorganism suitable for food applications,
[b] reducing the water content of the fermented germ broth obtained in step [a] to a water content sufficiently low for the fermentation germ broth to conserve its shape after being formed, by using mechanical solid-liquid separation means, to obtain an extrudable fermented germ solid fraction,
[c] extruding the extrudable fermented germ solid fraction obtained in step [b] to form it into the desired shape, to obtain a formed fermented germ extrudate,
[d] drying the formed fermented germ extrudate obtained in step [c] at a temperature of equal to or more than 45°C, to obtain a dried plant-based food product.

2. The method according to claim 1, **characterized in that** in step [d], the fermented germ extrudate obtained in step [c] is dried at a temperature equal to or more than 60°C.

3. The method according to claim 1, **characterized in that** in step [d], the fermented germ extrudate obtained in step [c] is dried at a temperature comprised between 80°C and 160°C.

4. The method according to any one of claims 1 to 3, **characterized in that** said plant seed germ-rich fraction is obtained from seeds of a plant belonging to the Fabaceae family, preferably from seeds of a plant belonging to a genus selected from the group consisting of *Prosopis, Caesalpinia, Ceratonia,* and *Cyamopsis.*

5. The method according to any one of claims 1 to 4, **characterized in that** in step [b] the water content is reduced to a water content equal to or less than 75% w/w, preferably, to a water content equal to or less than 70% w/w, and more preferably to a water content between 70% w/w and 60% w/w.

6. The method according to any one of claims 1 to 5, **characterized in that** step [b] further comprises the steps of
[b1] recovering the solid fraction of the fermented germ broth obtained in step [a] by filtration means, to obtain a fermented germ filtrate fraction, and
[b2] reducing the water content of the fermented germ filtrate fraction obtained in step [b1] by pressure-based liquid removal means, to obtain an extrudable fermented germ fraction.

7. The method according to any one of claims 1 to 6, **characterized in that** said microorganism produces and secretes an enzyme with endoglycosidase activity.

8. The method according to any one of claims 1 to 7, **characterized in that** in step [a] said microorganism is selected from the group consisting of lactic acid bacteria, yeast, and bacterium of the genus *Bacillus,* preferably from the group consisting of bacteria of the genus *Lactobacillus,* bacteria of the genus *Streptococcus, and* yeast of the genus *Saccharomyces.*

9. The method according to any one of claims 1 to 8, **characterized in that** in step [c] the extrudable fermented germ solid fraction obtained in step [b] is formed into a shape selected from the group consisting of a mince-like shape, a pasta-like shape, a sheet-like shape, a ribbon like shape, and a rod-like shape.

10. Dried plant-based food product obtainable by the method according to any one of claims 1 to 9.

11. Method for manufacturing a rehydrated plant-based food product **characterised in that** it comprises the steps of
[i] obtaining a dried plant-based food product according to claim 10, preferably by the method according to any one of claims 1 to 9, and
[ii] rehydrating said dried plant-based food product.

12. Rehydrated plant-based food product **characterised in that** it comprises the dried plant-based food product according to claim 10 and water.

13. Food product **characterised in that** it comprises a dried plant-based food product according to claim 10 or a rehydrated plant-based food product according to claim 12, preferably wherein said dried plant-based food product according to claim 10 or rehydrated plant-based food product according to claim 11 are used as a plant-based alternative to minced meat, minced meat-derived ingredients, or cereal derived ingredients.

14. Food product according to claim 13, **characterized in that** said food product is a hamburger-like food product, a meatball-like food product, a dumpling-like food product, a minced meat-like food product, a filling-like food product, or a pasta-like food product.

15. Use of a plant seed germ-rich fraction obtained from seeds of a plant belonging to a genus selected from the group consisting of *Prosopis, Caesalpinia, Ceratonia,* and *Cyamopsis,* preferably, obtained from seeds of a plant selected from the group consisting of *Prosopis alba, Prosopis nigra, Caesalpinia spinosa, Ceratonia siliqua,* and *Cyamopsis tetragonoloba,* for the manufacture of meat alternatives, also known as meat analogues, meat substitutes or plant-based meat.
